# EUROPÄISCHE PATENTSCHRIFT

(11) **EP 1 264 861 B1**
(45) Veröffentlichungstag und Bekanntmachung des Hinweises auf die Patenterteilung: **17.01.2007**
(21) Anmeldenummer: 02011598.6
(22) Anmeldetag: 28.05.2002
(51) Int. Cl.: C08L 67/08, C09D 167/08

(54) **Wässrige thixotrope Alkydharz-Zusammensetzungen**
Aqueous thixotropic alkyd resin compositions
Compositions aqueuses thixotropiques de résine alkyde

(30) Priorität: 05.06.2001 DE 10127287
(43) Veröffentlichungstag der Anmeldung: 11.12.2002
(73) Patentinhaber: Cytec Surface Specialties Austria GmbH, 8402 Werndorf (AT)
(72) Erfinder: Urbano, Edmund, Dr., 8044 Graz (AT); Gobec, Michael, Dr., 8010 Graz (AT); Grimm, Martin, 8062 Kumberg (AT)
(74) Vertreter: Deckers, Hellmuth Alexander

(56) Entgegenhaltungen:
- EP-A- 0 702 067
- EP-A- 0 922 738

## Beschreibung

Die Erfindung betrifft ein Verfahren zur Herstellung von wäßrigen thixotropen, oxidativ trocknenden Alkydharz-Zusammensetzungen und ihre Verwendung als Bindemittel in Beschichtungsmitteln verschiedenster Art.

Thixotropie ist vor allem bei solchen Beschichtungsmitteln vorteilhaft, die manuell durch Streichen oder Walzen aufgebracht werden, da so das Abtropfen des Lackes und das Abrinnen an senkrechten Flächen verhindert wird. Lacke auf der Basis von Alkydharzemulsionen zeigen mit der Verdünnung eine steile Viskositätskurve, so daß sie üblicherweise verdickt werden müssen. Größere Mengen an Verdickern beeinträchtigen aber den Verlauf des Lackfilms, weshalb bei wäßrigen Alkydharzlacken eine Thixotropierung wünschenswert ist.

Aus der EP-A 0 035 666 ist bekannt, Alkydharzen vor der Emulgierung in Wasser entweder durch Zusatz von Dimerfettsäurepolyamiden oder durch Reaktion mit diesen thixotrope Eigenschaften zu verleihen. Solcherart erhaltene thixotrope wäßrige Alkydharzemulsionen sind aber auf Zusätze polarer Lösungsmittel empfindlich, wie sie z. B. in wäßrigen Lacken als Hilfslösemittel oder in Abtönpasten enthalten sind. Sie verlieren im allgemeinen bei Temperaturen über 35 °C ihre thixotrope Struktur oder zeigen bei Lagerung Synerese (Aufschwimmen der flüssigen Phase), so daß eine längere Lagerung oder Anwendung bei höheren Temperaturen nicht möglich ist. Sie lassen sich wegen ihrer pastösen Konsistenz auch nicht pumpen, wodurch die Hantierung erschwert wird.

Gemäß der GB-A 2 293 606 gelingt die Herstellung von wäßrigen, thixotropen Alkydharz-Lacken, die über Harnstoffgruppen thixotropiert sind. Dabei wird in bevorzugter Weise ein im Alkydharz oder Polyesterharz gelöstes Diamin mit einem Monoisocyanat oder mit einem Diisocyanat-Monoalkohol-Addukt umgesetzt. Die so erhaltenen thixotropen Lacke zeigen jedoch ungenügende Lösungsmittel- und Wetterbeständigkeit, und bereits nach kurzer Zeit ist ein deutlicher Glanzabfall feststellbar. Das in GB-A 2 293 606 bevorzugt verwendete Tridecanol-Toluylendiisocyanat-Addukt verursacht offenbar auch eine höhere Tendenz zum Vergilben der so thixotropierten Polyester- und Alkydharzemulsionen und der damit formulierten Lacke gegenüber den nicht modifizierten Ausgangsprodukten.

Es wurde nun gefunden, daß Lacke mit Thixotropierungsmitteln, die olefinisch ungesättigte Gruppen enthalten, zu Beschichtungen mit guter Wetter- und Lösungsmittelbeständigkeit, hohem Glanz und nicht erhöhter Vergilbungstendenz verarbeitet werden können. Überraschenderweise ergab sich weiter, daß durch die Einführung mindestens einer olefinischen Doppelbindung in das Thixotropierungsmittel und den besonderen Aufbau desselben offenbar eine bessere Verträglichkeit des Thixotropierungsmittels mit der Alkydharzemulsion und eine ausreichend lagerstabile Lieferform erzielt werden, wodurch nun thixotrope Hochglanzlacke mit den erfindungsgemäßen thixotropen Alkydharzemulsionen zugänglich werden.

Die vorliegende Erfindung betrifft daher ein Verfahren zur Herstellung von thixotropen wäßrigen Alkydharzemulsionen enthaltend mindestens ein Alkydharz **a** und ein Thixotropierungsmittel **b,** dadurch gekennzeichnet, daß in einer ersten Stufe ein mehrfunktionelles Isocyanat **b11** mit einem olefinisch ungesättigten Hydroxyester **b12** umgesetzt wird zu einem isocyanatfunktionellen Umsetzungsprodukt **b1,** wobei das Verhältnis der Zahl der Isocyanatgruppen in **b11** zur Zahl der Hydroxylgruppen in **b12** 1 : 0,3 bis 1 : 0,8 ist, und in einem zweiten Schritt das isocyanatfunktionelle Umsetzungsprodukt **b1** mit einer aminischen Komponente **b2** unter Bildung des Thixotropierungsmittels **b** in Gegenwart zumindest eines Anteiles der wäßrigen Alkydharzemulsion **a** reagiert wird, wobei die Mengen von **b1** und **b2** so gewählt werden, daß nach Abschluß der Reaktion keine Isocyanatfunktion mehr nachweisbar ist.

Der Festkörper-Massenanteil in der wäßrigen thixotropen Alkydharz-Zusammensetzung beträgt bevorzugt zwischen 30 % und 60 %, wobei die Anteile des Alkydharzes **a** in diesem Feststoff bevorzugt 80 % bis 98 %, und die Anteile des Thixotropierungsmittels **b** bevorzugt 2 % bis 20 % betragen, und wobei die Summe der Massenanteile von **a** und **b** stets 100 % ergibt.

Besonders bevorzugt wird eine Zusammensetzung aus Massenanteilen von 85 % bis 98 % eines in Wasser emulgiertem Alkydharzes **a** und 2 % bis 15 % des Thixotropierungsmittels **b**.

Gegenstand der Erfindung ist auch ein Verfahren zur Herstellung von thixotropen wäßrigen Alkydharz-Zusammensetzungen durch Zusatz eines Thixotropierungsmittels **b** zu einem in Wasser emulgiertem Alkydharz **a**, wobei der Massenanteil von **b** bevorzugt 2 % bis 20 % beträgt und die Summe der Massenanteile von **a** und **b** 100 % ergibt, und wobei das Thixotropierungsmittel b durch Umsetzung eines isocyanat-funktionellen Umsetzungsproduktes **b1** und einer aminischen Komponente **b2** in Gegenwart zumindest eines Teils der Alkydharzemulsion **a** erhältlich ist, und bei der Herstellung von **b1** durch Umsetzung von einem mehrfunktionellen Isocyanat **b11** mit einem olefinisch ungesättigten Hydroxyester **b12**, gegebenenfalls in Gegenwart eines gegebenenfalls ungesättigten aliphatischen Monoalkohols **b13** mit 3 bis 22 C-Atomen, das Verhältnis der Zahl der Isocyanatgruppen in **b11** zur Zahl der Hydroxylgruppen in **b12** (bzw. **b12** und **b13**) 1 : 0,3 bis 1 : 0,8 ist, und
wobei die Mengen von **b1** und **b2** so gewählt werden, daß nach Abschluß der Reaktion keine Isocyanatfunktion mehr nachweisbar ist.

Die Umsetzung der isocyanatfunktionellen Komponente **b1** mit der aminischen Komponente **b2** erfolgt in Gegenwart zumindest eines Anteiles der Alkydharzemulsion a, wobei gemäß einer bevorzugten Ausführungsform mindestens 25 % (bevorzugt mindestens 50 %, besonders bevorzugt mindestens 80 %) der Masse der Alkydharzemulsion **a** bereits bei dieser Umsetzung zugegen sind, während die restlichen maximal 75 % (maximal 50 % bzw. 20 %) der Masse der Alkydharzemulsion erst nach der Umsetzung von **b1** und **b2** zugesetzt werden.

Gegenstand der Erfindung ist weiter die Verwendung der nach diesem Verfahren erhaltenen, wäßrigen thixotropen Alkydharz-Zusammensetzungen, gegebenenfalls auch in Kombination mit anderen Harzen, vor allem in oxidativ trocknenden oder über einen radikalischen Mechanismus härtenden Beschichtungsmitteln.

Unter Alkydharzen versteht man durch Polykondensation nach bekannten Verfahren hergestellte Polykondensate, wie sie bei D. H. Salomon, "The Chemistry of Organic Filmformers"; S. 75- 131, Robert E. Krieger Publishing Co., Inc., 2nd Edition 1982, beschrieben sind.

Die für die Erfindung verwendeten oxydativ trocknenden Alkydharze a zeichnen sich durch einen Gehalt von mehrfach ungesättigten Fettsäuren oder Ölen aus. Nach DIN 53183 können Alkydharze zur Erzielung besonderer anwendungstechnischer Eigenschaften durch Zusatz von weiteren Verbindungen oder durch Reaktion mit diesen modifiziert sein, z. B. mit Harzsäuren, Benzoesäure, Styrol, Vinyltoluol, Isocyanaten, Acryl-, Epoxy- oder Silikonverbindungen. Diese Mischungen oder Reaktionsprodukte werden als "modifizierte Alkydharze" bezeichnet. Obgleich heute vielfach bei der Synthese von Alkydharzen direkt von Fettsäuren statt von deren Triglyceriden ausgegangen wird, wird die Angabe des Ölgehalts ("Öllänge") als Massenanteil in % beibehalten und der Gehalt an Fettsäuren in den
Massenanteil der entsprechenden Triglyceride im Alkydharz umgerechnet als Öllänge angegeben.

Als Fettsäuren werden insbesondere Safflorölfettsäure, Linolsäure, isomerisierte Linolsäure, Sojaölfettsäure sowie Tallölfettsäure eingesetzt. Die bevorzugten mehrwertigen Alkohole sind Pentaerythrit, Trimethylolpropan, Trimethyloläthan, Glycerin, Dipentaerythrit und Ditrimethylolpropan. Als Dicarbonsäuren werden insbesondere Phthalsäure bzw. deren Anhydrid, Iso- und Terephthalsäure, Trimellithsäure, sowie in begrenztem Umfang auch Adipinsäure, Azelainsäure und Sebacinsäure eingesetzt.

Für die erfindungsgemäße Zusammensetzung kommen als Komponente **a** beliebige Alkydharzemulsionen wie sie z.B. in der EP-A 0 295 403 beschrieben sind, zum Einsatz. Sie zeichnen sich dadurch aus, daß sie über die Neutralisation von Carboxylgruppen mit Aminen und/oder Ammoniak in Wasser emulgierbar gemacht werden.

Die Komponente **b1** wird durch Umsetzung eines bevorzugt linearen aliphatischen mehrfunktionellen Isocyanats **b11** mit einer olefinisch ungesättigten Hydroxylgruppen-haltigen Verbindung, bevorzugt einem Hydroxyester, **b12**, gegebenenfalls in Gegenwart eines bevorzugt ungesättigten aliphatischen linearen, verzweigten oder cyclischen Monoalkohols **b13** mit 3 bis 22 C-Atomen erhalten, wobei das Verhältnis der Anzahl der Isocyanatgruppen in **b11** zur Anzahl der Hydroxylgruppen in **b12** (und **b13**, soweit diese Komponente mitverwendet wird) 1 : 0,3 bis 1 : 0,8 beträgt. Die Hydroxylgruppen-haltigen Komponenten **b12** und **b13** werden also im stöchiometrischen Unterschuß eingesetzt, bezogen auf die Anzahl der Hydroxyl- und Isocyanatgruppen. Die Komponente **b1** weist daher noch (unreagierte) Isocyanatgruppen auf und wird daher als "isocyanatfunktionell" bezeichnet.

Die mehrfunktionellen Isocyanate **b11** sind Verbindungen mit zwei oder mehreren Isocyanatgruppen im Molekül. Bevorzugt werden lineare aliphatische Isocyanate, insbesondere Diisocyanate; es können auch Gemische von Isocyanaten (Mono, Di-, Tri- und höher funktionelle Isocyanate) eingesetzt werden, wobei die mittlere Isocyanatfunktionalität (mittlere Anzahl der Isocyanatgruppen je Molekül) mindestens 1,8, bevorzugt mindestens 2,0 beträgt. Beispiele für geeignete lineare mehrfunktionelle Isocyanate sind 1,2-Diisocyanatoäthan, 1,3-Diisocyanatopropan, 1,4-Diisocyanatobutan, Hexamethylendiisocyanat, 1,8-Diisocyanatooctan und 1,12-Diisocyanatododecan sowie deren dimeren und trimeren Polyisocyanate (Uretdione und Biurete) sowie Allophanate und Reaktionsprodukte von mehrfunktionellen linearen Isocyanaten mit Diolen; von diesen sind die Verbindungen mit zwei Isocyanatgruppen bevorzugt. Ebenfalls möglich, jedoch weniger bevorzugt ist die Verwendung von kurzkettig verzweigten (z.B mit einer oder mehreren Methylgruppen substituierten) aliphatischen alpha, omega-Diisocyanaten wie 1,5-Diisocyanato-2-methylpentan oder 2,2,4- und 2,4,4-Trimethyldiisocyanatohexan.

Als Reaktionspartner **b12** für diese mehrfunktionellen Isocyanate werden bevorzugt Hydroxyalkylester **b121** von aliphatischen α,β-ungesättigten Carbonsäuren **b1211** oder α,β-ungesättigten Dicarbonsäuren **b1212** mit linearen, verzweigten oder cyclischen aliphatischen Alkoholen **b1213** mit 2 bis 10 Kohlenstoffatomen eingesetzt; bevorzugt werden z. B. Hydroxyäthyl-, 2- und 3-Hydroxypropyl- und 4-Hydroxybutylester von Acrylsäure und Methacrylsäure; die Komponente **b12** kann bevorzugt auch Umsetzungsprodukte **b122** der unter **b1211** und **b1212** genannten Säuren mit aliphatischen Epoxiden **b1222** ausgewählt aus Oxiran, Methyloxiran, 1,2-Epoxybutan, 1,2-Epoxyhexan, Glycidyläthern von linearen, verzweigten oder cyclischen aliphatischen Alkoholen mit 1 bis 20 Kohlenstoffatomen und Glycidylestern von aliphatischen gesättigten linearen, verzweigten oder cyclischen Carbonsäuren mit 1 bis 20 Kohlenstoffatomen, bevorzugt Alkoxylierungsprodukte von (Meth)-Acrylsäure bis zu einem Alkoxylierungsgrad von 10 mol Alkylenoxid pro 1 mol (Meth)-Acrylsäure, wobei die Alkylenoxide bevorzugt aus Oxiran und Methyloxiran sowie deren Mischungen ausgewählt sind, wie z. B. (Meth)Acrylsäuretripropylenglykolmonoester und (Meth)Acrylsäure-polypropylenglykolmonoester mit einem mittleren Polymerisationsgrad von 4 bis 70. Besonders bevorzugt werden olefinisch ungesättigte Monohydroxy-Verbindungen; werden Derivate von α,β-ungesättigten Dicarbonsäuren eingesetzt, so ist bevorzugt nur eine der Carboxylgruppen mit einem Diol zur Hydroxyalkylverbindung verestert, während die zweite Carboxylgruppe vorzugsweise mit einem einwertigen Alkohol verestert ist, bevorzugt mit Methanol, Äthanol, Propanol oder einem der isomeren Butanole.

Zur Steuerung der Verträglichkeit des Thixotropierungsmittels mit einer Reihe von Alkydharzemulsionen können gegebenenfalls weitere bevorzugt ein-oder mehrfach ungesättigte Monoalkohole **b13** mit 3 bis 22 C-Atomen, wie z. B. Oleyl- und Linoleylalkohol oder deren Mischungen mit gesättigten Fettalkoholen, wie sie aus natürlichen Ressourcen entstehen, oder auch Allylalkohol und seine Alkoxylierungsprodukte oder hydroxyfunktionelle Polyallyläther, wie z. B. Trimethylolpropandiallyläther, eingesetzt werden. Der Einsatz von gesättigten Monoalkoholen ist ebenfalls möglich. Dabei werden insbesondere aliphatische lineare oder verzweigte Alkohole, bevorzugt primäre Alkohole, mit 4 bis 22 Kohlenstoffatomen, bevorzugt 6 bis 20 Kohlenstoffatomen eingesetzt. Die Stoffmenge der Verbindungen **b13** kann bis zu 120 %, bevorzugt bis zu 100 %, der Stoffmenge der Verbindungen **b12** betragen.

Als Komponente **b2** können Amine eingesetzt werden, bei denen die Aminogruppen jeweils an ein aliphatisches Kohlenstoffatom gebunden sind, bevorzugt werden primäre Diamine, wie z. B. Alkylendiamine und deren alkylsubstituierte Vertreter mit 2 bis 20 Kohlenstoffatomen, wie z. B. 1,2-Äthandiamin, Hexan-1,6-diamin, 2,2,4- und 2,4,4-Trimethylhexan-1,6-diamin, Neopentandiamin, 2-Butyl-2-äthyl-1,5-pentandiamin, 2-Methyl-1,6-hexandiamin, 1,4-Butandiamin und 1,2-Propandiamin. Als weitere geeignete Polyamine sind PolyoxyalkylenDiamine mit zwei primären Aminogruppen zu nennen, wie z. B. Polyoxyäthylen- und Polyoxypropylendiamin mit jeweils einer gewichtsmittleren molaren Masse von bevorzugt 120 bis 8000 g/mol, besonders bevorzugt von 150 bis 4000 g/mol.

In den erfindungsgemäßen Zusammensetzungen ist auch Ammoniak als Komponente **b2** verwendbar. Dabei wird ein asymmetrisch substituierter Harnstoff mit Thixotropierungswirkung erhalten, der über die Doppelbindungen in der Komponente **b1** bei der oxidativen Trocknung in das Alkydharz eingebaut wird und keine Beeinträchtigung der Wetterfestigkeit ergibt. Neben gasförmigem Ammoniak können auch wäßrige Lösungen, wie sie zur Neutralisation des emulgierten Alkydharzes verwendet werden, eingesetzt werden.

Bei der erfindungsgemäßen Synthese der Komponente **b** erfolgt vor allem die Additionsreaktion zwischen den (bevorzugt aliphatisch gebundenen) Isocyanatgruppen der Komponente **b1** und den Aminogruppen bzw. dem Ammoniak der Komponente **b2**, während offenbar eine Reaktion zwischen den Isocyanatgruppen der Komponente **b1** und den gegenüber Isocyanaten reaktionsfähigen Hydroxyl- und Carboxylgruppen des Alkydharzes (Komponente **a**) oder mit Wasser nur in untergeordnetem Ausmaß, insbesondere bei höheren Temperaturen, stattfindet. Bei reaktionsfreudigen (zum Beispiel aromatischen) Isocyanaten ist aber auch eine teilweise Addition von Wasser und Überführung der Isocyanatgruppen von **b1** in Aminogruppen möglich, welche mit weiterer Komponente **b1** zu substituierten Harnstoffen reagieren können.

Bevorzugt sind auch solche Thixotropierungsmittel, die durch Umsetzung der folgenden Komponenten erhältlich sind:

| | |
|---|---|
| als Komponente **b11:** | 1,6-Diisocyanatohexan, 1,4-Diisocyanatobutan |
| als Komponente **b12:** | Hydroxyäthyl(meth)acrylat; Polypropylenglykol-mono(meth)acrylat |
| als Komponente **b13:** | Stearylalkohol, Isotridecylalkohol, (Iso)Decylalkohol, 2-Äthylhexanol |
| als Komponente **b2:** | 1,6-Diaminohexan, Polyoxypropylendiamin mit einer mittleren molarenMasse von ca. 230 bis ca. 4000 g/mol, |

dabei werden die Komponenten vorzugsweise in solchen Mengen eingesetzt, daß Addukte mit zwei über die (Meth)acrylsäureester eingeführten ungesättigten Gruppen resultieren, ebenfalls bevorzugt sind bezüglich der ungesättigten Gruppen monofunktionelle Addukte. Über die geeignete Wahl der Menge der Ausgangsstoffe und der Folge der Dosierung bei der Umsetzung läßt es sich auch erreichen, daß Addukte gebildet werden, die zwei oder mehr von dem Diamin **b2** abgeleitete Reste in ihrem Molekül aufweisen. Die Eigenschaften des Adduktes lassen sich durch Verwendung der Polyoxypropyleneinheiten enthaltenden Komponenten ebenfalls gezielt einstellen.

Die Herstellung des Thixotropierungsmittels kann, wie oben beschrieben, separat oder bevorzugt in Gegenwart der Alkydharzkomponente der erfindungsgemäßen Zusammensetzung oder zumindest eines Teiles davon durchgeführt werden. Bevorzugt wird das erfindungsgemäße Thixotropierungsmittel in der Alkydharzemulsion in situ gebildet. Dabei wird die Komponente **b2** mit der Alkydharzemulsion a gemischt und bei einer Temperatur von 0 bis 140 °C die (separat hergestellte) isocyanatfunktionelle Komponente **b1** zugegeben und bis zum vollständigen Umsatz (Verbrauch) der Isocyanatgruppen reagiert.

Nach der Reaktion resultiert eine als Alleinbindemittel oder als Zumischharz einsetzbare, in der Regel oxidativ vernetzende, thixotrope Alkydharzemulsion, die zur Formulierung von Überzugs-, Beschichtungs- und Abdichtmassen verwendet werden kann.

In der Regel erfolgt die Vernetzungsreaktion des so thixotropierten Bindemittels nach gegebenenfalls weiteren Modifikationen und gegebenenfalls unter Zugabe von Reaktivverdünnern, Lösungsmitteln und weiteren Zusatzstoffen nach der Applikation unter Einwirkung von Luftsauerstoff. Es können aber auch bei Raumtemperatur reaktionsfähige Vernetzungskomponenten wie z. B. mehrfunktionelle Isocyanate zugesetzt werden. Hierbei resultieren 2-Komponenten-Polyurethan-Lacke. Die gemeinsame Verwendung der erfindungsgemäßen Bindemittel mit bei höheren Temperaturen wirksamen Vernetzern (wie Melaminharz-Vernetzern oder blockierten Isocyanaten) ist ebenfalls möglich.

Lacke, die die erfindungsgemäßen Alkydharzemulsionen als Bindemittel enthalten, können als Überzugsmittel für Substrate aller Art wie Holz, Metall, Kunststoffe und Leder, und auch für mineralische Untergründe dienen. Sie lassen sich durch Spritzen, Streichen, Tauchen und Walzen aufbringen. Sie können als Klarlacke oder pigmentierte Lacke eingesetzt werden und führen zu Lackierungen mit hohem Oberflächenglanz, hoher Deckkraft, sehr gutem Verhältnis von Härte zu Elastizität, guter Wasser- und Chemikalienbeständigkeit und guter Wetterfestigkeit.

Die nachfolgenden Beispiele erläutern die Erfindung, ohne sie in ihrem Umfang zu beschränken. Alle Angaben in Prozent ("%") bedeuten Massenanteile der betreffenden Komponente (Masse der Komponente dividiert durch Masse der Mischung).

Die Säurezahl ist gemäß DIN 53 402 definiert als der Quotient derjenigen Masse *m*_{KOH} an Kaliumhydroxid, die erforderlich ist, um eine zu untersuchende Probe zu neutralisieren, und der Masse *m*_{B} dieser Probe (Masse des Feststoffes in der Probe bei Lösungen oder Dispersionen); ihre übliche Einheit ist "mg/g".

Die Hydroxylzahl ist gemäß DIN 53 240 definiert als der Quotient derjenigen Masse *m*_{KOH} an Kaliumhydroxid, die genausoviel Hydroxylgruppen aufweist wie eine zu untersuchende Probe, und der Masse *m*_{B} dieser Probe (Masse des Feststoffes in der Probe bei Lösungen oder Dispersionen); ihre übliche Einheit ist "mg/g".

### In den Beispielen wurden folgende Alkydharzemulsionen a eingesetzt:

### Alkydharzemulsion A

wäßrige Alkydharzemulsion mit einem Festkörper-Massenanteil von 45 %, einer Säurezahl von 52 mg/g, einem Ölgehalt von 58 % sowie einer dynamischen Viskosität bei 23 °C von 4200 mPa·s

### Alkydharzemulsion B

wäßrige Alkydharzemulsion mit einem Festkörper-Massenanteil von 38 %, einer Säurezahl von 48 mg/g, einem Ölgehalt von 46 % sowie einer dynamischen Viskosität bei 23 °C von 3500 mPa·s

### Isocyanatfunktionelle Komponenten b1a bis b1e

Das in Tabelle 1 angeführte Diisocyanat wurde im angegebenen Verhältnis mit dem (Meth)Acrylsäure-hydroxyalkylester und dem Alkohol in der Weise umgesetzt, daß das Diisocyanat im Reaktionsgefäß vorgelegt wurde und bei einer Temperatur von 30 °C die anderen Rohstoffe allmählich zugefügt wurden. Durch die Exothermie der Reaktion stieg die Temperatur dabei bis ca. 40 ° C. Diese Temperatur wurde auch bis zum vollständigen Umsatz der Hydroxylgruppen gehalten.

**Tabelle 1**

| Komponente (eingesetzte Masse in g) | b1a | b1b | b1c | b1d | b1e |
|---|---|---|---|---|---|
| Hexamethylendiisocyanat | 168 | 168 | - | 168 | 168 |
| Hexamethylendiisocyanat-Dimer (Uretdion) | - | - | 336 | - | - |
| Methacrylsäure-2-hydroxyäthylester | 130 | - | - | 91 | - |
| Acrylsäure-4-hydroxybutylester | - | 158 | - | - | - |
| Methacrylsäure-tripropylenglykol-Monoester | - | - | - | - | 130 |
| ^{®} HD-Ocenol 110/130* | - | - | 133 | - | - |
| Isotridecylalkohol | - | - | 100 | 60 | - |
| Trimethylolpropandiallyläther | - | - | - | - | 110 |
| Isocyanatwert (in %) gemäß DIN 53185 | | | | | |

| | | | | | |
|---|---|---|---|---|---|
| *) Oleyl-Linoleyalkohol, Jodzahl (n. DIN 53241) 110 bis 130 g/(100 g), Fa. Cognis | | | | | |

### Thixotropierung der wäßrigen Alkydharz-Zusammensetzungen

### Beispiele 1 bis 6

Die Thixotropierung der Bindemittel wurde in einer "in situ-Reaktion" durchgeführt. Dabei wurde die Komponente **b2** bei 30 °C mit dem Alkydharz vollständig gemischt und die Isocyanatkomponente **b1** bei dieser Temperatur in ca. 15 Minuten unter Rührung zugegeben. Nach guter Durchmischung wurde der Ansatz 2 Stunden lang auf 35 °C gehalten. Die eingesetzten Massen der betreffenden Komponenten sind in Tabelle 2 angegeben. Die Zusammensetzungen 1 bis 3 wurden auf einen Festkörper-Massenanteil von 42 %, die übrigen auf 38 % eingestellt.

**Tabelle 2**

| Beispiel | 1 | 2 | 3 | 4 | 5 | 6 |
|---|---|---|---|---|---|---|
| wäßrige Alkydharzemulsion | A | A | A | A | B | B |
| Masse der Emulsion in g (Lieferform) Massengehalt Festharz in der Lieferform | 211 45 % | 207 45 % | 207 45 % | 204 45 % | 242 38 % | 247 38 % |
| **Komponente b2** (Masse in g) | | | | | | |
| Ammoniak conc. | | | 0,40 | | | |
| 1,6-Hexandiamin | 0,8 | | | | 1,0 | 0,9 |
| Polyoxypropylendiamin (M_{w} = 400 g/mol) | | 2,7 | | 3,1 | | |
| 1,2-Äthandiamin | | | 0,18 | | | |
| **Komponente b1** | | | | | | |
| Variante (Tabelle 1) | b1a | b1b | b1c | b1d | b1e | b1d |
| Masse in g | 4,2 | 4,3 | 6,7 | 4,9 | 7,0 | 5,1 |
| Masse des Feststoffanteils in der erfindungsgemäßen thixotropen Alkydharzemulsion in g | 100 | 100 | 100 | 100 | 100 | 100 |

### Herstellung von thixotropen Klarlacken

Je 45 g thixotrope Alkydharzemulsion aus den Beispielen 1 und 4 wurden mit weiterem Wasser auf einen Festkörper-Massenanteil von 34 % verdünnt, zusätzlich wurden 0,3 g eines wasseremulgierbaren handelsüblichen Kobalt-Zirkontrockners (Metallgehalt: Co 5 %, Zr 10 %) und 0,4 g Methyläthylketoxim eingerührt. Eine dynamische Viskosität bei 23 °C und einer Scherrate von 10.000 s⁻¹ von ca. 150 mPa·s wurde eingestellt. Nach 24 Stunden wurden die tropffreien Klarlacke auf Holz appliziert und ergaben für beide Beispiele eine Ablaufgrenze von über 300 µm.

Die Klebfreizeit wird bestimmt, indem der nicht pigmentierte Lack auf eine Glasplatte in einer Schichtdicke von 76 µm aufgetragen wird. Nach festgelegten Zeitintervallen bei Aufbewahrung bei Raumtemperatur (20 °C, 50 % rel. Luftfeuchtigkeit) wird die Klebrigkeit durch leichtes Auflegen der Fingerkuppe bestimmt.

Die Ablaufgrenze wird bestimmt, indem der auf Verarbeitungsviskosität (bevorzugt ca. 150 mPa·s) eingestellte Klarlack in einen Verlauf- und Ablauf-Prüfrakel (Erichsen, Modell 419) auf das Substrat gegossen wird. Beim Ziehen des Rakels mit gleichmäßiger Geschwindigkeit über das Substrat bilden sich 10 in einem Abstand von 1,6 mm nebeneinanderliegende Streifen aus mit einer Breite von je 6,4 mm, die Schichtdicke entspricht den Spaltbreiten von 75, 100, 125 etc. bis 300 µm. Das Substrat wird unmittelbar nach Auftragen der Lackstreifen senkrecht so aufgestellt, daß der dünnste Streifen nach oben zu liegen kommt, und alle Streifen waagrecht ausgerichtet sind. Abhängig von den Ablauf-Eigenschaften des Lackes verlaufen die Streifen zu einer zusammenhängenden Schicht oder bleiben getrennt.

Als Vergleich wurde ein Klarlack mit einer Alkydharzemulsion (Alkydharz A) mit einem Thixotropierungsmittel gemäß der GB-A 2 293 606, Beispiel 1, hergestellt (Umsetzungsprodukt von Tridecanol mit Toluylendiisocyanat). Bei gleicher Ablaufgrenze von 300 µm war die Wasser- und Dunkel-Vergilbungsbeständigkeit des getrockneten Lackfilms deutlich schlechter als die mit den erfindungsgemäßen Thixotropiermitteln erreichten Beständigkeitswerte:

**Tabelle 3: Beständigkeit der Klarlacke**

| | Klebfreizeit in Stunden | Wasserbeständigkeit | Vergilbung im Dunklen (b*-Wert nach 6 Monaten) |
|---|---|---|---|
| Klarlack mit Alkydharzemulsion 1 | 5 | i. O. | 22,6 |
| Klarlack mit Alkydharzemulsion 4 | 1,5 | i. O. | 12,8 |
| Vergleichslack (siehe Beschreibung) | 6 | opak | 28,3 |

Die Klebfreizeit wurde bestimmt gemäß ASTM - D 1640.

Die Wasserbeständigkeit wurde bestimmt durch Lagerung während 24 Stunden unter Wasser bei Raumtemperatur (20 °C), nachdem die Lackschicht vorher 1 Woche nach Auftragen getrocknet worden war. Die Oberfläche des Lacks wurde anschließend visuell beurteilt (Glanz, weißliche Verfärbung, Anquellen).

Die Vergilbung im Dunkeln wurde nach 6-monatiger Lagerung unter Lichtabschluß mit einem Farbmeßgerät (CIELAB-System) bestimmt. Stärkere Vergilbung zeigt sich in der Erhöhung des b*-Wertes.

### Herstellung von thixotropen Weißlacken

Je 69 g der erfindungsgemäßen thixotropen Alkydharzemulsionen aus den Beispielen 2, 4, 5 und 6 wurden mit 3 g Wasser verdünnt und mit 23 g Titandioxid angerieben. Anschließend wurden 0,3 g wasseremulgierbarer handelsüblicher Kobalt-Zirkontrockner (s. o.) und 0,3 g Methyläthylketoxim eingerührt.

Der Festkörper-Massenanteil der Lacke war 53 bzw. 51 %, die dynamische Viskosität bei 23 °C und einer Scherrate von 10.000 s⁻¹ betrug ca. 200 mPa·s, und die Ablaufgrenze über 300 µm in allen vier Fällen.

Als Vergleich wurde ein Weißlack mit einer Alkydharzemulsion (Alkydharz A) mit einem Thixotropierungsmittel gemäß der GB-A 2 293 606, Beispiel 1, hergestellt (Umsetzungsprodukt von Tridecanol mit Toluylendiisocyanat). Bei gleicher Ablaufgrenze von 300 µm war die Wasser- und Dunkel-Vergilbungsbeständigkeit des getrockneten Lackfilms deutlich schlechter als die mit den erfindungsgemäßen Thixotropiermitteln erreichten Beständigkeitswerte:

**Tabelle 4: Beständigkeit der Weißlacke**

| | Klebfreizeit in Stunden | Wasserbeständigkeit (24 h - Feuchtetest) | Vergilbung im Dunklen (b*-Wert nach 6 Monaten) |
|---|---|---|---|
| Weißlack mit Alkydharzemulsion 2 | 3,5 | i. O. | 8,2 |
| Weißlack mit Alkydharzemulsion 4 | 3,5 | i. O. | 8,6 |
| Weißlack mit Alkydharzemulsion 5 | 1,0 | i. O. | 5,0 |
| Weißlack mit Alkydharzemulsion 6 | 1,5 | i. O. | 4,8 |
| Vergleichslack | 4,5 | leichter Glanzverlust | 9,8 |

Die anwendungstechnischen charakteristischen Größen wurden bestimmt wie bei Tabelle 3 angegeben.

## Patentansprüche

1. Verfahren zur Herstellung von thixotropen wäßrigen Alkydharzemulsionen enthaltend mindestens ein Alkydharz **a** und ein Thixotropierungsmittel **b**, **dadurch gekennzeichnet, daß** in einer ersten Stufe ein mehrfunktionelles Isocyanat **b11** mit einem olefinisch ungesättigten Hydroxyester **b12** umgesetzt wird zu einem isocyanatfunktionellen Umsetzungsprodukt **b1,** wobei das Verhältnis der Zahl der Isocyanatgruppen in **b11** zur Zahl der Hydroxylgruppen in **b12** 1 : 0,3 bis 1 : 0,8 ist, und in einem zweiten Schritt das isocyanatfunktionelle Umsetzungsprodukt **b1** mit einer aminischen Komponente **b2** unter Bildung des Thixotropierungsmittels **b** in Gegenwart zumindest eines Anteiles der wäßrigen Alkydharzemulsion a reagiert wird, wobei die Mengen von **b1** und **b2** so gewählt werden, daß nach Abschluß der Reaktion keine Isocyanatfunktion mehr nachweisbar ist.

2. Verfahren nach Anspruch 1, **dadurch gekennzeichnet, daß** mindestens 25 % der Masse der Alkydharzemulsion a bereits bei der Umsetzung in der zweiten Stufe zugegen sind, während die restlichen maximal 75 % der Masse der Alkydharzemulsion a erst nach der Umsetzung von **b1** und **b2** zugesetzt werden.

3. Verfahren nach Anspruch 1, **dadurch gekennzeichnet, daß** als mehrfunktionelles Isocyanat **b11** ein lineares aliphatisches mehrfunktionelles Isocyanat eingesetzt wird.

4. Verfahren nach Anspruch 1, **dadurch gekennzeichnet, daß** die Umsetzung in der ersten Stufe in Gegenwart eines aliphatischen linearen oder verzweigten Monoalkohols **b13** mit 3 bis 22 C-Atomen vorgenommen wird, wobei das Verhältnis der Zahl der Isocyanatgruppen in der Komponente **b11** zur Zahl der Hydroxylgruppen in den Komponenten **b12** und **b13** 1: 0,3 bis 1 : 0,8 ist.

5. Verfahren nach Anspruch 1, **dadurch gekennzeichnet, daß** die olefinisch ungesättigten aliphatischen Hydroxyverbindungen **b12** ausgewählt werden aus Hydroxyalkylestern **b121** von aliphatischen alpha, beta-ungesättigten Carbonsäuren **b1211** oder alpha, beta-ungesättigten Dicarbonsäuren **b1212** mit 2 bis 10 Kohlenstoffatomen im Hydroxyalkylrest und Alkoxylierungsprodukten von (Meth)Acrylsäure mit einem Alkoxylierungsgrad von bis zu 10 mol Alkylenoxid pro 1 mol (Meth)Acrylsäure.

6. Verfahren nach Anspruch 1, **dadurch gekennzeichnet, daß** die aminische Komponente **b2** ausgewählt ist aus organischen (Poly)aminen mit mindestens einer primären Aminogruppe und Ammoniak.

7. Verfahren nach Anspruch 1, **dadurch gekennzeichnet, daß** die Mengen der Ausgangsmaterialien so gewählt werden, daß der Festkörper-Massenanteil in der thixotropierten Alkydharzemulsion zwischen 30 % und 60 % beträgt, wobei die Anteile des Alkydharzes **a** in diesem Feststoff 80 % bis 98 %, und die Anteile des Thixotropierungsmittels **b** 2 % bis 20 % betragen, und wobei die Summe der Massenanteile von **a** und **b** stets 100 % ergibt.

8. Verfahren nach Anspruch 1, **dadurch gekennzeichnet, daß** die Alkydharzemulsion a durch Emulgieren in Wasser von einem Alkydharz mit einem Ölgehalt von 30 % bis 80 % hergestellt wird.

9. Verfahren nach Anspruch 4, **dadurch gekennzeichnet, daß** im ersten Schritt die Stoffmenge der Verbindungen **b13** bis zu 120 % der Stoffmenge der Verbindungen **b12** beträgt.

10. Verfahren nach Anspruch 4, **dadurch gekennzeichnet, daß** im ersten Schritt olefinisch ungesättigte Verbindungen **b13** eingesetzt werden.

11. Verfahren nach Anspruch 1, **dadurch gekennzeichnet, daß** als mehrfunktionelle Isocyanate **b11** solche mit einer mittleren Isocyanatfunktionalität von mindestens 1,8 eingesetzt werden.

12. Verfahren nach Anspruch 1, **dadurch gekennzeichnet, daß** als Komponente **b2** Ammoniak oder solche Amine eingesetzt werden, bei denen die Aminogruppen jeweils an ein aliphatisches Kohlenstoffatom gebunden sind.

13. Verfahren nach Anspruch 1, **dadurch gekennzeichnet, daß** als Komponente **b2** lineare aliphatische Diaminen oder Polyoxyalkylendiamine eingesetzt werden,

14. Verwendung der gemäß Anspruch 1 hergestellten thixotropen Alkydharzemulsionen in oxidativ trocknenden oder über einen radikalischen Mechanismus härtenden Beschichtungsmitteln

## Claims

1. A process for preparing thixotropic aqueous alkyd resin emulsions comprising at least one alkyd resin **a** and a thixotropic agent **b,** which comprises in a first stage reacting a polyfunctional isocyanate **b11** with an olefinically unsaturated hydroxy ester **b12** to given an isocyanate-functional reaction product **b1**, the ratio of the number of isocyanate groups in **b11** to the number of hydroxyl groups in **b12** being 1:0.3 to 1:0.8, and in a second step reacting the isocyanate-functional reaction product **b1** with an aminic component **b2** to form the thixotropic agent **b** in the presence at least of a fraction of the aqueous alkyd resin emulsion **a**, the amounts of **b1** and **b2** being selected such that after the end of the reaction isocyanate function is no longer detectable.

2. The process of claim 1, wherein at least 25 % of the mass of the alkyd resin emulsion **a** is already present during the reaction in the second stage, while the remaining not more than 75 % of the mass of the alkyd resin emulsion **a** is added only after the reaction of **b1** and **b2**.

3. The process of claim 1, wherein a linear aliphatic polyfunctional isocyanate is used as polyfunctional isocyanate **b11**.

4. The process of claim 1, wherein the reaction in the first stage is performed in the presence of an aliphatic linear or branched monoalcohol **b13** having 3 to 22 carbon atoms, the ratio of the number of isocyanate groups in component **b11** to the number of hydroxyl groups in components **b12** and **b13** being 1:0.3 to 1:0.8.

5. The process of claim 1, wherein the olefinically unsaturated aliphatic hydroxy compounds **b12** are selected from hydroxyalkyl esters **b121** of aliphatic alpha,beta-unsaturated carboxylic acids **b1211** or alpha,beta-unsaturated dicarboxylic acids **b1212** having 2 to 10 carbon atoms in the hydroxyalkyl radical and alkoxylation products of (meth)acrylic acid having a degree of alkoxylation of up to 10 mol of alkylene oxide per mole of (meth)acrylic acid.

6. The process of claim 1, wherein the aminic component b2 is selected from organic (poly)amines having at least one primary amino group and ammonia.

7. The process of claim 1, wherein the amounts of the starting materials are selected such that the mass fraction of solids in the thixotroped alkyd resin emulsion is between 30 % and 60 %, the fractions of the alkyd resin **a** in this solid being 80 % to 98 %, and the fractions of the thixotropic agent **b** being 2 % to 20 %, and the sum of the mass fractions of a and b always making 100 %.

8. The process of claim 1, wherein the alkyd resin emulsion **a** is prepared by emulsifying in water an alkyd resin having an oil length of 30 % to 80 %.

9. The process of claim 4, wherein the amount of substance of the compounds **b13** in the first step is up to 120 % of the amount of substance of the compounds **b12**.

10. The process of claim 4, wherein olefinically unsaturated compounds **b13** are used in the first step.

11. The process of claim 1, wherein polyfunctional isocyanates **b11** used are those having an average isocyanate functionality of at least 1.8.

12. The process of claim 1, wherein use is made as component **b2** of ammonia or of amines in which the amino groups are each attached to an aliphatic carbon atom.

13. The process of claim 1, wherein linear aliphatic diamines or polyoxyalkylenediamines are used as component **b2.**

14. The use of the thixotropic alkyd resin emulsions prepared in accordance with claim 1 in coating materials which dry oxidatively or which cure by way of a free-radical mechanism.

## Revendications

1. Procédé pour la préparation d'émulsions aqueuses thixotropes de résine alkyde contenant au moins une résine alkyde **a** et un agent de thixotropisation **b**, **caractérisé en ce que**, dans une première étape, on fait réagir un isocyanate polyfonctionnel **b11** avec un hydroxyester **b12** à insaturation oléfinique pour obtenir un produit de réaction **b1** à fonction isocyanate, où le rapport du nombre des groupes isocyanate dans **b11** au nombre des groupes hydroxy dans **b12** allant de 1:0,3 à 1:0,8 et, **en ce que** dans une deuxième étape, on fait réagir le produit de réaction **b1** à fonction isocyanate avec un composant de type amine **b2**, avec formation de l'agent de thixotropisation **b** en présence d'au moins une fraction de l'émulsion aqueuse de résine alkyde **a**, les quantités de **b1** et **b2** étant choisies de manière qu'une fois la réaction terminée aucune fonction isocyanate ne soit plus décelable.

2. Procédé selon la revendication 1, **caractérisé en ce qu'**au moins 25 % de la masse de l'émulsion de résine alkyde **a** sont déjà présents lors de la réaction dans la seconde étape, tandis que les 75 % au maximum restants de la masse de l'émulsion de résine alkyde **a** ne sont ajoutés qu'après la réaction de **b1** et **b2.**

3. Procédé selon la revendication 1, **caractérisé en ce qu'**on utilise comme isocyanate polyfonctionnel **b11** un isocyanate polyfonctionnel aliphatique linéaire.

4. Procédé selon la revendication 1, **caractérisé en ce que** la réaction dans la première étape est effectuée en présence d'un monoalcool **b13** aliphatique linéaire ou ramifié ayant de 3 à 22 atomes de carbone, le rapport du nombre des groupes isocyanate dans le composant **b11** au nombre des groupes hydroxy dans les composants **b12** et **b13** allant de 1:03 à 1:0,8.

5. Procédé selon la revendication 1, **caractérisé en ce que** les composés hydroxylés aliphatiques **b12** à insaturation oléfinique sont choisis parmi des esters hydroxyalkyliques **b121** d'acides carboxyliques aliphatiques **b1211** α,β-insaturés ou d'acides dicarboxyliques aliphatiques **b1212** α,β-insaturés, ayant de 2 à 10 atomes de carbone dans le radical hydroxyalkyle et des produits d'alcoxylation d'acide (méth)acrylique ayant un degré d'alcoxylation allant jusqu'à 10 moles d'oxyde d'alkylène par mole d'acide (méth)acrylique.

6. Procédé selon la revendication 1, **caractérisé en ce que** le composant de type amine **b2** est choisi parmi des (poly)amines organiques comportant au moins un groupe amino primaire et l'ammoniac.

7. Procédé selon la revendication 1, **caractérisé en ce que** les quantités des produits de départ sont choisies de manière que la proportion en masse de matière solide dans l'émulsion de résine alkyde rendue thixotrope est comprise entre 30 % et 60 %, les proportions de la résine alkyde **a** dans cette matière solide allant de 80 % à 98 %, et les proportions de l'agent de thixotropisation **b** allant de 2 % à 20 %, et la somme des proportions en masse de **a** et **b** étant égale à 100 %.

8. Procédé selon la revendication 1, **caractérisé en ce que** l'émulsion de résine alkyde **a** est préparée par émulsification dans l'eau d'une résine alkyde ayant une teneur en huile de 30 % à 80 %.

9. Procédé selon la revendication 4, **caractérisé en ce que** dans la première étape la quantité de matière des composés **b13** représente jusqu'à 120 % de la quantité de matière des composés **b12**.

10. Procédé selon la revendication 4, **caractérisé en ce que** dans la première étape on utilise des composés **b13** à insaturation oléfinique.

11. Procédé selon la revendication 1, **caractérisé en ce qu'**on utilise comme isocyanates polyfonctionnels **b11** ceux ayant une fonctionnalité isocyanate moyenne d'au moins 1,8.

12. Procédé selon la revendication 1, **caractérisé en ce qu'**on utilise comme composant **b2** l'ammoniac ou les amines dans lesquelles les groupes amino sont liés chacun à un atome de carbone aliphatique.

13. Procédé selon la revendication 1, **caractérisé en ce qu'**on utilise comme composant **b2** des polyoxyalkylènediamines ou des diamines aliphatiques linéaires.

14. Utilisation des émulsions de résines alkyde thixotropes préparées selon la revendication 1, dans des compositions de revêtement séchant par oxydation ou durcissant par un mécanisme radicalaire.
